# EUROPEAN PATENT APPLICATION

(11) **EP 4 737 003 A1**
(43) Date of publication of application: **06.05.2026**
(21) Application number: 24831535.0
(22) Date of filing: 28.05.2024
(51) Int. Cl.: B01J 35/57, B01D 53/94, B01J 20/18, B01J 20/28, B01J 29/74, B01J 35/64, F01N 3/10, F01N 3/24

(54) **EXHAUST GAS PURIFICATION CATALYST DEVICE FOR GASOLINE ENGINE**

(30) Priority: 27.06.2023 JP 2023105178
(71) Applicant: CATALER CORPORATION, Kakegawa-shi, Shizuoka 437-1492 (JP)
(72) Inventor: TAKASU, Ryosuke, Kakegawa-shi, Shizuoka 437-1492 (JP); SUGAWARA, Ko, Kakegawa-shi, Shizuoka 437-1492 (JP); SHIRAYAMA, Yodai, Kakegawa-shi, Shizuoka 437-1492 (JP); ITO, Masaya, Kakegawa-shi, Shizuoka 437-1492 (JP); YAMAZAKI, Yuya, Kakegawa-shi, Shizuoka 437-1492 (JP)
(74) Representative: Ricker, Mathias
(86) International application number: PCT/JP2024/019467
(87) International publication number: WO 2025/004664

(57) **Abstract**

Provided is an exhaust gas purification catalyst device for a gasoline engine. The exhaust gas purification catalyst device has: a substrate; an NH₃ adsorption layer containing a proton-type zeolite; and a PGM layer containing a catalytic noble metal selected from among Pd, Pt, and Rh. The proton-type zeolite contained in the NH₃ adsorption layer has an average pore diameter of 0.60 nm or less. The NH₃ adsorption layer is disposed closer to the substrate than the PGM layer and is disposed at a length shorter than the entire length of the substrate from the upstream end of the substrate in the exhaust gas flow direction. The PGM layer is disposed at a length longer than the NH₃ adsorption layer from the upstream end of the substrate in the exhaust gas flow direction. The PGM layer has a first PGM layer containing a catalytic noble metal selected from among Pd and Pt, and a second PGM layer containing Rh. The first PGM layer contains ceria.

## Description

### FIELD

The present invention relates to an exhaust gas purification catalyst device for a gasoline engine.

### BACKGROUND

Exhaust gas emitted from gasoline engines includes HC (hydrocarbon), CO (carbon monoxide) and NOx (nitrogen oxide) gases, which are discharged into the atmosphere after having been purified by an exhaust gas purification catalyst device disposed in the exhaust system of the engine.

Three-way catalysts are known, as exhaust gas purification catalyst devices that can purify all three gases, HC, CO and NOx. For example, PTL 1 describes an exhaust gas purification catalyst comprising an alumina layer with a multilayer structure on a substrate, with rhodium supported on the inner alumina layer, and with at least one from among platinum and palladium supported on the alumina layer on the front side.

### [CITATION LIST]

### [PATENT LITERATURE]

[PTL 1] Japanese Unexamined Patent Publication SHO No. 63-039633

### SUMMARY

### [TECHNICAL PROBLEM]

When a mixture of gasoline and air is in an enriched state in a gasoline engine, reduction of NOx by a three-way catalyst tends to produce ammonia (NH₃). A greater amount of ammonia tends to be generated during engine start-up.

The produced ammonia can be purified with a three-way catalyst. However, in the low temperature state before the catalyst is warmed, such as during engine start-up, a portion of the produced ammonia is often emitted without being purified.

The EU Vehicle Emission Standard "Euro7" sets restrictions for ammonia emissions, not only for large vehicles but also for passenger vehicles and vans.

The present invention has been completed in light of these circumstances. It is an object of the present invention to provide an exhaust gas purification catalyst device for a gasoline engine with reduced ammonia emissions even in a low-temperature state such as during engine start-up.

### [SOLUTION TO PROBLEM]

The present invention is as follows.

### <Aspect 1>

An exhaust gas purification catalyst device for a gasoline engine, comprising:
a substrate,
an NH₃ adsorption layer containing proton-type zeolite, and
a PGM layer containing a noble metal catalyst selected from among Pd, Pt and Rh, wherein
the proton-type zeolite in the NH₃ adsorption layer has a mean pore size of 0.60 nm or smaller,
the NH₃ adsorption layer
is disposed further toward the substrate side than the PGM layer, and
is disposed at a location with a shorter length than the full length of the substrate, from the upstream end of the exhaust gas flow on the substrate, and
the PGM layer is disposed at a location with a longer length than the NH₃ adsorption layer, from the upstream end of the exhaust gas flow on the substrate,
the PGM layer comprising a first PGM layer containing a noble metal catalyst selected from among Pd and Pt, and a second PGM layer containing Rh, and
the first PGM layer comprising ceria.

### <Aspect 2>

The exhaust gas purification catalyst device according to aspect 1, wherein the proton-type zeolite comprises a small-ring proton-type zeolite in which the basic skeleton is composed entirely of rings selected from among 4, 6 and 8-membered rings, at 80 mass% or greater with respect to the total mass of the proton-type zeolite.

### <Aspect 3>

The exhaust gas purification catalyst device according to aspect 2, wherein the small-ring proton-type zeolite is one or more selected from among H-ACO, H-AEI, H-AEN, H-AFN, H-AFT, AFX, H-ANA, H-APC, H-APD, H-ATT, H-CDO, H-CHA, H-DDR, H-DFT, H-EAB, H-EDI, H-EPI, H-ERI, H-GIS, H-GOO, H-IHW, H-ITE, H-ITW, H-LEV, H-LTA, H-KFI, H-MER, H-MON, H-NSI, H-OWE, H-PAU, H-PHI, H-RHO, H-RTH, H-SAT, H-SAV, H-SIV, H-THO, H-TSC, H-UEI, H-UFI, H-VNI, H-YUG and H-ZON.

### <Aspect 4>

The exhaust gas purification catalyst device according to aspect 1, wherein the amount of ceria in the first PGM layer is 4.0 g/L or greater and 45.0 g/L or lower as the ceria mass per 1 L of substrate capacity.

### <Aspect 5>

The exhaust gas purification catalyst device according to aspect 2, wherein the amount of ceria in the first PGM layer is 4.0 g/L or greater and 45.0 g/L or lower as the ceria mass per 1 L of substrate capacity.

### <Aspect 6>

The exhaust gas purification catalyst device according to any one of aspects 1 to 5, wherein
the first PGM layer is the uppermost layer in direct contact with the exhaust gas across a length of at least 10% of the full length of the substrate from the upstream end of the exhaust gas flow on the substrate, and
the second PGM layer is the uppermost layer in direct contact with the exhaust gas across a length of at least 20% of the full length of the substrate from the downstream end of the exhaust gas flow on the substrate.

### <Aspect 7>

The exhaust gas purification catalyst device according to aspect 6, wherein the first PGM layer is disposed at a length of greater than 70% of the full length of the substrate from the upstream end of the exhaust gas flow on the substrate.

### <Aspect 8>

The exhaust gas purification catalyst device according to aspect 6, wherein the second PGM layer is disposed at a length of 20% or greater and 90% or less of the full length of the substrate from the downstream end of the exhaust gas flow on the substrate.

### <Aspect 9>

The exhaust gas purification catalyst device according to aspect 6, wherein
the first PGM layer is disposed at a length of greater than 70% of the full length of the substrate from the upstream end of the exhaust gas flow on the substrate,
the second PGM layer is disposed at a length of 30% or greater and 90% or less of the full length of the substrate from the downstream end of the exhaust gas flow on the substrate,
the total of the length of the first PGM layer and the length of the second PGM layer exceeds the full length of the substrate, and
the second PGM layer is the uppermost layer in direct contact with the exhaust gas in the region where the first PGM layer and the second PGM layer overlap.

### <Aspect 10>

An exhaust gas purification method which comprises disposing an exhaust gas purification catalyst device according to any one of aspects 1 to 5 in an exhaust system of a gasoline engine, to purify exhaust gas that has been emitted from the gasoline engine.

### <Aspect 11>

An exhaust gas purification catalyst system for a gasoline engine, comprising:
an upstream end purification catalyst device disposed at the upstream end of the exhaust gas flow in the exhaust system of the gasoline engine, and
a downstream end purification catalyst device disposed at the downstream end of the exhaust gas flow in the exhaust system,
   wherein the upstream end purification catalyst device is a three-way exhaust gas purification catalyst device comprising a platinum group noble metal catalyst, and
the downstream end purification catalyst device is an exhaust gas purification catalyst device according to any one of aspects 1 to 5.

### <Aspect 12>

An exhaust gas purification method which comprises disposing an exhaust gas purification catalyst system according to aspect 11 in an exhaust system of a gasoline engine, to purify exhaust gas that has been emitted from the gasoline engine.

### [ADVANTAGEOUS EFFECTS OF INVENTION]

The present invention provides an exhaust gas purification catalyst device for a gasoline engine having reduced ammonia emissions even in a low-temperature state such as during engine start-up.

### BRIEF DESCRIPTION OF DRAWINGS

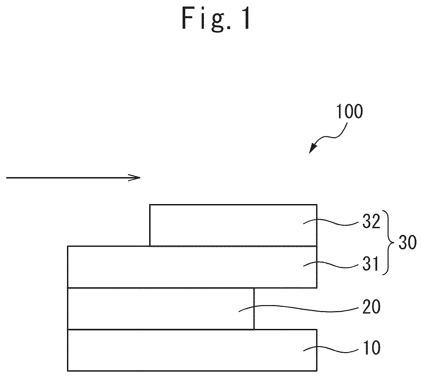

Fig. 1 is a simplified cross-sectional view showing the construction of an exhaust gas purification catalyst device according to an embodiment of the invention.

### DESCRIPTION OF EMBODIMENTS

### <Exhaust gas purification catalyst device>

The exhaust gas purification catalyst device of the invention is an exhaust gas purification catalyst device comprising:
a substrate,
an NH₃ adsorption layer containing proton-type zeolite, and
a PGM layer containing a noble metal catalyst selected from among Pd, Pt and Rh, wherein
the proton-type zeolite in the NH₃ adsorption layer has a mean pore size of 0.60 nm or smaller,
the NH₃ adsorption layer
is disposed further toward the substrate side than the PGM layer, and
is disposed at a location with a shorter length than the full length of the substrate, from the upstream end of the exhaust gas flow on the substrate, and
the PGM layer is disposed at a location with a longer length than the NH₃ adsorption layer, from the upstream end of the exhaust gas flow on the substrate,
the PGM layer comprising a first PGM layer containing a noble metal catalyst selected from among Pd and Pt, and a second PGM layer containing Rh, and
the first PGM layer comprising ceria.

Fig. 1 shows the construction of an exhaust gas purification catalyst device according to an embodiment of the invention. In Fig. 1, the thick-line arrow indicates the direction of exhaust gas flow.

The exhaust gas purification catalyst device (100) of Fig. 1 has a substrate (10), an NH₃ adsorption layer (20) and a PGM layer (30). The PGM layer (30) includes a first PGM layer (31) and a second PGM layer (32).

In the exhaust gas purification catalyst device (100), the NH₃ adsorption layer (20) is disposed further toward the substrate (10) side than the PGM layer (30), with a shorter length than the full length of the substrate (10), from the upstream end of the exhaust gas flow on the substrate (10). The PGM layer (30) (that is, the laminated stack of the first PGM layer (31) and second PGM layer (32)) is disposed with a longer length than the NH₃ adsorption layer (20), from the upstream end of the exhaust gas flow on the substrate (10), in a manner covering the NH₃ adsorption layer (20).

In an exhaust gas purification catalyst device (100) having such a construction, ammonia is easily produced by reduction of NOx by the upper PGM layer (30) in a low temperature state before warming up of the catalyst device, such as during engine start-up. The generated ammonia is adsorbed onto the NH₃ adsorption layer (20) that is in direct contact with the PGM layer (30) in the low temperature state, and outward emission is inhibited.

When the catalyst device is warmed, the ammonia adsorbed onto the NH₃ adsorption layer (20) is desorbed from the NH₃ adsorption layer (20). The ammonia that has been desorbed from the NH₃ adsorption layer (20) contacts with the PGM layer (30) covering the NH₃ adsorption layer (20), and is purified and then released into the air.

This action mechanism in the exhaust gas purification catalyst device of the invention reduces emissions of ammonia both before warming and after warming.

The constituent elements of the exhaust gas purification catalyst device of the invention will now be explained in order.

### <Substrate>

The substrate for the exhaust gas purification catalyst device of the invention may be a substrate having a plurality of cell flow channels divided by partition walls, and it may be a honeycomb substrate such as used in exhaust gas purification catalyst devices of the prior art. The partition walls of the substrate may also have pores allowing fluid communication between adjacent exhaust gas flow paths, or it may lack such pores.

The constituent material of the substrate may be a fire resistant inorganic oxide such as cordierite or silicon carbide, for example, or it may be a metal. The substrate may be either a straight flow type or a wall flow type.

The substrate for the method for producing an exhaust gas purification catalyst device of the invention may typically be a cordierite or silicon carbide straight flow type monolith honeycomb substrate, a cordierite or silicon carbide wall flow type monolith honeycomb substrate, or a metal honeycomb substrate, for example.

The shape of the substrate may be circular columnar, elliptic cylindrical or polygonal columnar.

The volume of the substrate may be 500 mL or greater, 800 mL or greater, 1.0 L or greater or 1.2 L or greater, and 5.0 L or lower, 3.0 L or lower, 2.0 L or lower, 1.5 L or lower or 1.2 L or lower, for example, as the apparent volume represented by the base area × length.

### <NH₃ adsorption layer>

The NH₃ adsorption layer contains proton-type zeolite.

Since ordinary zeolite has a metal ion as the charge compensation cation, the charge compensation cation usually elutes after prolonged use, thus impairing the NH₃ adsorption capacity. In contrast, proton-type zeolite has a proton as the zeolite charge compensation cation, and therefore the heat resistance is high and reduction in NH₃ adsorption capacity due to elution of the charge compensation cation is inhibited.

The mean pore size of the proton-type zeolite in the NH₃ adsorption layer is 0.60 nm or lower. The adsorption performance of zeolite depends on the relationship between the pore size of the zeolite and the molecular size of the substance to be adsorbed. Since the molecular size of NH₃ is about 0.26 nm, it can be adsorbed at high efficiency onto zeolite with a mean pore size of 0.60 nm or smaller.

The mean pore size of the proton-type zeolite may be 0.55 nm or smaller, 0.50 nm or smaller, 0.45 nm or smaller, 0.40 nm or smaller, 0.35 nm or smaller or 0.30 nm or smaller, and 0.25 nm or larger, 0.30 nm or larger, 0.35 nm or larger or 0.40 nm or larger, for example.

The pore size of proton-type zeolite is defined in an unambiguous manner in the database of the International Zeolite Association Structure Commission, based on the crystal structure. When the proton-type zeolite is a mixture of multiple crystal structures, the mean pore size of the proton-type zeolite is defined as the mean value of the pore sizes of each crystal structure represented in the database.

The proton-type zeolite in the NH₃ adsorption layer of the exhaust gas purification catalyst device of the invention may also comprise small-ring proton-type zeolite. As used herein, "small-ring proton-type zeolite" means proton-type zeolite wherein the basic skeleton consists entirely of rings selected from among 4, 6 and 8-membered rings.

The small-ring proton-type zeolite may be the H-ACO, H-AEI, H-AEN, H-AFN, H-AFT, AFX, H-ANA, H-APC, H-APD, H-ATT, H-CDO, H-CHA, H-DDR, H-DFT, H-EAB, H-EDI, H-EPI, H-ERI, H-GIS, H-GOO, H-IHW, H-ITE, H-ITW, H-LEV, H-LTA, H-KFI, H-MER, H-MON, H-NSI, H-OWE, H-PAU, H-PHI, H-RHO, H-RTH, H-SAT, H-SAV, H-SIV, H-THO, H-TSC, H-UEI, H-UFI, H-VNI, H-YUG or H-ZON form, any one or more of which may be used.

From the viewpoint of more effectively adsorbing NH₃, the proton-type zeolite in the NH₃ adsorption layer of the invention may comprise the small-ring proton-type zeolite at 80 mass% or greater, 85 mass% or greater, 90 mass% or greater, 95 mass% or greater, 98 mass% or greater or 99 mass% or greater with respect to the total mass of the proton-type zeolite, or alternatively 100 mass% of the proton-type zeolite may be small-ring proton-type zeolite.

The SiO₂/Al₂O₃ ratio (SAR) of the proton-type zeolite is not particularly restricted and may be 5 or greater, 10 or greater, 20 or greater, 30 or greater, 40 or greater or 50 or greater, and 500 or lower, 300 or lower, 200 or lower, 100 or lower or 50 or lower, for example.

The NH₃ adsorption layer may also include optional components other than proton-type zeolite. The optional components in the NH₃ adsorption layer may be, for example, zeolite other than proton-type zeolite, inorganic oxides other than zeolite, compounds containing alkali metal elements or alkaline earth metal elements, or binders.

An inorganic oxide other than zeolite, as an optional component in the NH₃ adsorption layer, may be an oxide of one or more elements selected from among Al, Si, Ti, Zr and Ce, and rare earths other than Ce. The binder may be selected from among alumina sol, zirconia sol and titania sol, for example.

The NH₃ adsorption layer may contain iron-group or copper-group elements (especially iron and copper), or it may not include them. If the NH₃ adsorption layer contains an iron-group or copper-group element, the proton-type zeolite may undergo ion-exchange with those elements. When the exchanged ions dissociate from the ion-exchanged zeolite, the zeolite skeleton may disintegrate, resulting in impaired NH₃ adsorption capacity. From this viewpoint, the NH₃ adsorption layer does not need to include an iron-group element or copper-group element.

The NH₃ adsorption layer may include or not include a noble metal catalyst (for example, a platinum-group element). Since a noble metal catalyst in the NH₃ adsorption layer may aggregate during use and impair the catalyst performance, the NH₃ adsorption layer does not need to contain a noble metal catalyst.

From the viewpoint of more effectively adsorbing NH₃, the proportion of proton-type zeolite in the NH₃ adsorption layer may be 50 mass% or greater, 60 mass% or greater, 70 mass% or greater, 80 mass% or greater, 90 mass% or greater or 95 mass% or greater, and lower than 100 mass%, 98 mass% or lower, 95 mass% or lower, 90 mass% or lower or 80 mass% or lower, for example, as the mass ratio of proton-type zeolite with respect to the total mass of the NH₃ adsorption layer.

In the exhaust gas purification catalyst device of the invention, the NH₃ adsorption layer is disposed further toward the substrate side than the PGM layer described below. The NH₃ adsorption layer may be disposed in contact with the partition walls of the substrate, to form the lower layer of the catalyst layer.

In the exhaust gas purification catalyst device of the invention, the NH₃ adsorption layer is disposed with a shorter length than the full length of the substrate, from the upstream end of the exhaust gas flow on the substrate. In other words, the NH₃ adsorption layer is not disposed near the downstream end of the substrate. With this construction it is possible to efficiently adsorb NH₃ that has flowed into the exhaust gas purification catalyst device, while also reducing the likelihood that NH₃ that has desorbed from the NH₃ adsorption layer after warming of the exhaust gas purification catalyst device will be emitted from the exhaust gas purification catalyst device without contacting with the upper PGM layer, and this is therefore preferred from the viewpoint of reducing NH₃ emission.

From the viewpoint of efficiently adsorbing NH₃, the length of the NH₃ adsorption layer may be 30% or more, 40% or more, 50% or more or 60% or more of the full length of the substrate, from the upstream end of the substrate. From the viewpoint of reliably contacting and purifying the desorbed NH₃ with the PGM layer, on the other hand, the length of the NH₃ adsorption layer may be 95% or less, 90% or less, 85% or less, 80% or less, 75% or less or 70% or less of the full length of the substrate, from the upstream end of the substrate.

The amount of the NH₃ adsorption layer disposed in the exhaust gas purification catalyst device of the invention, as the mass of the NH₃ adsorption layer per volume of the substrate including the portion where the NH₃ adsorption layer is not disposed, may be 20 g/L or greater, 50 g/L or greater, 80 g/L or greater or 100 g/L or greater from the viewpoint of ensuring an effective amount of NH₃ absorption, and 300 g/L or lower, 250 g/L or lower, 200 g/L or lower or 150 g/L or lower, from the viewpoint of avoiding excessive increase in pressure loss.

### <PGM layer>

The PGM layer comprises a first PGM layer containing a noble metal catalyst selected from among Pd and Pt, and a second PGM layer containing Rh as a noble metal catalyst, wherein the first PGM layer comprises ceria (CeO₂).

The noble metal catalyst selected from among Pd and Pt in the first PGM layer may be in the form of fine particles supported on an inorganic oxide. The mean particle size of the noble metal catalyst particles may be 1 nm or greater, 2 nm or greater or 3 nm or greater, and 15 nm or smaller, 10 nm or smaller, 7 nm or smaller or 5 nm or smaller, for example.

The content of the noble metal catalyst in the first PGM layer may be 0.05 g/L or higher, 0.10 g/L or higher, 0.20 g/L or higher, 0.30 g/L or higher or 0.40 g/L or higher, and 1.50 g/L or lower, 1.20 g/L or lower, 1.00 g/L or lower, 0.80 g/L or lower, 0.60 g/L or lower or 0.50 g/L or lower, as the total mass of Pd and Pt per volume of the substrate, including the portion where the first PGM layer is not disposed.

The noble metal catalyst in the first PGM layer may be supported on one or more inorganic oxides in the first PGM layer.

The first PGM layer contains ceria and may also contain other inorganic oxides. The inorganic oxides other than ceria in the first PGM layer may be appropriately selected from among those mentioned above as inorganic oxides in the NH₃ adsorption layer. The first PGM layer may comprise ceria and alumina in particular, and may further comprise other inorganic oxides.

Ceria is an inorganic oxide with oxygen storage-release capacity. Ceria may be ceria alone, or it may be in a form included in a complex oxide of Ce and another inorganic element (for example, a ceria-zirconia complex oxide).

If the first PGM layer comprises a fixed amount of ceria, the three-way catalyst power will be improved. The ceria content of the first PGM layer is 5 mass% or higher, 10 mass% or higher, 12 mass% or higher or 15 mass% or higher, and 60 mass% or lower, 50 mass% or lower, 40 mass% or lower, 30 mass% or lower or 20 mass% or lower, as the mass ratio of ceria with respect to the total mass of the PGM layer. When ceria is in the form of a complex oxide of Ce and another inorganic element, the mass ratio of the ceria is the value of the complex oxide mass ratio in terms of the ceria equivalent amount.

From the viewpoint of satisfactorily maintaining the three-way catalyst performance during both lean and enriched periods, the amount of ceria in the first PGM layer may be 4.0 g/L or greater, 8.0 g/L or greater, 12.0 g/L or greater, 15.0 g/L or greater, 20.0 g/L or greater or 30.0 g/L or greater, and 45.0 g/L or lower, 40.0 g/L or lower, 35.0 g/L or lower, 30.0 g/L or lower or 25.0 g/L or lower, as the mass of ceria per 1 L of substrate capacity.

The first PGM layer may contain or not contain zeolite. However, if the first PGM layer contains zeolite, disposing the NH₃ adsorption layer and the PGM layer as separate layers can potentially interfere with the gist of the invention, which is efficient absorption of NH₃ and efficient purification of desorbed NH₃. From this viewpoint, then, the first PGM layer does not need to comprise zeolite.

The first PGM layer may also contain an alkaline component. The alkali component may be selected from among compounds comprising alkali metals and alkaline earth metals. Examples of alkali metals include lithium, sodium and potassium, and examples of alkaline earth metals include calcium, strontium and barium, any one or more of which may be selected for use.

The alkali component may be an oxide or sulfate of an alkali metal or alkaline earth metal, for example.

The content of the alkali component in the first PGM layer may be 1.0 g/L or higher, 3.0 g/L or higher, 5.0 g/L or higher or 7.5 g/L or higher, and 20.0 g/L or lower, 18.0 g/L or lower, 15.0 g/L or lower or 12.0 g/L or lower, as the mass per volume of the substrate, including the portion where the first PGM layer is not disposed.

The amount of the first PGM layer disposed in the exhaust gas purification catalyst device of the invention, as the mass of the first PGM layer per volume of the substrate including the portion where the first PGM layer is not disposed, may be 80 g/L or greater, 90 g/L or greater, 100 g/L or greater, 120 g/L or greater or 150 g/L or greater from the viewpoint of ensuring effective three-way catalyst power (especially oxidizing purification catalyst power), and it may be 300 g/L or lower, 250 g/L or lower, 200 g/L or lower, 180 g/L or lower, 150 g/L or lower or 130 g/L or lower, from the viewpoint of avoiding excessive increase in pressure loss.

The second PGM layer contains Rh as a noble metal catalyst.

The noble metal catalyst Rh in the second PGM layer may be in the form of fine particles supported on an inorganic oxide. The mean particle size of the Rh particles may be 1 nm or greater, 2 nm or greater or 3 nm or greater, and 15 nm or smaller, 10 nm or smaller, 7 nm or smaller or 5 nm or smaller, for example.

The Rh content in the second PGM layer may be 0.05 g/L or higher, 0.10 g/L or higher, 0.15 g/L or higher or 0.20 g/L or higher, and 1.00 g/L or lower, 0.80 g/L or lower, 0.50 g/L or lower, 0.40 g/L or lower or 0.30 g/L or lower, as the Rh mass per volume of the substrate, including the portion where the second PGM layer is not disposed.

The noble metal catalyst in the second PGM layer may be supported on one or more inorganic oxides in the second PGM layer.

The inorganic oxides in the second PGM layer may be appropriately selected from among those mentioned above as inorganic oxides in the NH₃ adsorption layer. The second PGM layer may comprise alumina, or it may further comprise ceria, and also other inorganic oxides. Ceria may be ceria alone, or it may be in a form included in a complex oxide of Ce and another inorganic element (for example, a ceria-zirconia complex oxide).

The second PGM layer may also contain a fixed amount of ceria. The ceria content of the second PGM layer may be 1 mass% or higher, 3 mass% or higher, 5 mass% or higher or 7 mass% or higher, and 20 mass% or lower, 15 mass% or lower, 10 mass% or lower or 8 mass% or lower, as the mass ratio of ceria with respect to the total mass of the second PGM layer. When ceria is in the form of a complex oxide of Ce and another inorganic element, the mass ratio of the ceria is the value of the complex oxide mass ratio in terms of the ceria equivalent amount.

From the viewpoint of satisfactorily maintaining the three-way catalyst performance during both lean and enriched periods, the amount of ceria in the second PGM layer may be 2.0 g/L or greater, 4.0 g/L or greater, 5.0 g/L or greater, 6.0 g/L or greater or 8.0 g/L or greater, and 20.0 g/L or less, 20.0 g/L or less, 15.0 g/L or less, 12.0 g/L or less or 10.0 g/L or less, as the mass of ceria per 1 L of substrate capacity.

The second PGM layer may contain or not contain zeolite. In other words, the second PGM layer does not need to contain zeolite.

The second PGM layer may also contain or not contain an alkali component. In other words, the second PGM layer does not need to contain an alkaline component.

The amount of the second PGM layer disposed in the exhaust gas purification catalyst device of the invention, as the mass of the NH₃ adsorption layer per volume of the substrate including the portion where the second PGM layer is not disposed, may be 80 g/L or greater, 90 g/L or greater, 100 g/L or greater or 120 g/L or greater from the viewpoint of ensuring effective three-way catalyst power (especially reduction purification catalyst power), and it may be 200 g/L or lower, 180 g/L or lower, 150 g/L or lower or 130 g/L or lower from the viewpoint of avoiding excessive increase in pressure loss.

The PGM layer (layered body of the first PGM layer and second PGM layer) is disposed at a longer length than the NH₃ adsorption layer, from the upstream end of the exhaust gas flow on the substrate. With this construction, the NH₃ adsorption layer is covered by the PGM layer over the entire length, and in particular, the downstream end of the NH₃ adsorption layer is covered by the PGM layer. This is therefore preferred from the viewpoint of allowing the NH₃ that has desorbed from the NH₃ adsorption layer to reliably contact with the PGM layer and be purified.

The placement range of the PGM layer is a range of greater than 100% of the length of the NH₃ adsorption layer from the upstream end of the exhaust gas flow on the substrate, and up to the same length as the full length of the substrate. The length of the PGM layer may be 105% or greater, 110% or greater or 120% or greater of the length of the NH₃ adsorption layer, and up to but not greater than the full length of the substrate. The PGM layer may also be disposed at the same length as the full length of the substrate, from the upstream end of the exhaust gas flow on the substrate.

In the exhaust gas purification catalyst device of the invention, the PGM layer is disposed on the side of the NH₃ adsorption layer opposite the substrate side. The PGM layer may be disposed on the NH₃ adsorption layer within the region where the NH₃ adsorption layer is disposed on the substrate, or it may be disposed in contact with the partition walls of the substrate within the region where the NH₃ adsorption layer is not disposed on the substrate.

The total length of the first PGM layer and second PGM layer may be equal to or longer (as calculated) than the full length of the substrate.

The first PGM layer may be disposed so as to extend from the upstream end of the exhaust gas flow on the substrate toward the downstream end of the exhaust gas flow. The length of the first PGM layer may be, for example, greater than 70%, 75% or greater, 80% or greater, 85% or greater, 90% or greater or 95% or greater, and 100% or less, 99% or less, 95% or less, 90% or less, 80% or less or 75% or less, of the full length of the substrate.

The first PGM layer may be the uppermost layer in direct contact with the exhaust gas near the upstream end of the exhaust gas flow on the substrate. This construction is preferred since it will allow HC and CO to be effectively purified even before the exhaust gas purification catalyst device is warmed up.

The length where the first PGM layer constitutes the uppermost layer in direct contact with the exhaust gas near the upstream end of the exhaust gas flow on the substrate may be, for example, 10% or greater, 20% or greater, 30% or greater, 40% or greater or 50% or greater, and 80% or less, 70% or less, 60% or less or 50% or less, of the full length of the substrate.

The second PGM layer may be disposed so as to extend from the downstream end of the exhaust gas flow on the substrate toward the upstream end of the exhaust gas flow. The length of the second PGM layer may be 20% or greater, 30% or greater, 40% or greater, 50% or greater or 60% or greater, and 90% or less, 80% or less, 70% or less or 60% or less, of the full length of the substrate.

The second PGM layer may be the uppermost layer in direct contact with the exhaust gas near the downstream end of the exhaust gas flow on the substrate. Such a construction allows effective purification of both the NOx before the exhaust gas purification catalyst device has warmed up, and the NH₃ that has been desorbed from the NOx and NH₃ adsorption layer after the exhaust gas purification catalyst device has warmed up.

The length where the second PGM layer constitutes the uppermost layer in direct contact with the exhaust gas near the downstream end of the exhaust gas flow on the substrate may be, for example, 20% or greater, 30% or greater, 40% or greater, 50% or greater or 60% or greater, and 90% or less, 80% or less, 70% or less or 60% or less, of the full length of the substrate.

If the total of the lengths of the first PGM layer and second PGM layer is longer than the full length of the substrate, the first PGM layer and second PGM layer will overlap in the region near the center of the substrate, causing them to be disposed in a layered manner. In this case, the second PGM layer may be the uppermost layer in direct contact with the exhaust gas at the overlapping sections of both layers.

According to one embodiment, in the PGM layer of the exhaust gas purification catalyst device of the invention,
the first PGM layer is disposed at a length of greater than 70% of the full length of the substrate from the upstream end of the exhaust gas flow on the substrate,
the second PGM layer is disposed at a length of 30% or greater and 90% or less of the full length of the substrate from the downstream end of the exhaust gas flow on the substrate,
the total of the length of the first PGM layer and the length of the second PGM layer exceeds the full length of the substrate, and
in the region where the first PGM layer and the second PGM layer overlap, the second PGM layer is the uppermost layer that is in direct contact with the exhaust gas.

### <Method for producing exhaust gas purification catalyst device>

The exhaust gas purification catalyst device of the invention may be produced by any method so long as it has the construction described above.

An example of a method for producing an exhaust gas purification catalyst device of the invention will now be described as a non-limitative example.

The exhaust gas purification catalyst device of the invention may be produced, for example, by a method in which the NH₃ adsorption layer, first PGM layer and second PGM layer are disposed in that order on partition walls that partition the cell flow channels of the substrate.

The NH₃ adsorption layer may be disposed, for example, by coating the NH₃ adsorption layer-forming coating solution onto the partition walls of the substrate over a specified length from the upstream end of the exhaust gas flow, and drying and firing it.

The substrate may be appropriately selected according to the desired substrate for the exhaust gas purification catalyst device, and for example, a cordierite or silicon carbide straight flow type monolith honeycomb substrate may be used.

The NH₃ adsorption layer-forming coating solution may be, for example, a liquid comprising specified amounts of proton-type zeolite and other optional components dissolved or dispersed in a suitable solvent (typically water). Addition of a suitable thickening agent to the NH₃ adsorption layer-forming coating solution to adjust the viscosity of the coating solution is preferred for easier control of the coating length of the coating solution. Examples of thickeners include polyvinyl alcohol (PVA)-based resins; cellulosic resins such as methyl cellulose, ethyl cellulose, hydroxyethyl cellulose (HEC) and carboxymethyl cellulose; rosin-based resins and acrylic-based resins, any one or more of which may be selected for use.

Drying and firing after coating of the coating solution may be carried out according to a publicly known method, or after appropriate modifications by a person skilled in the art.

The first PGM layer is then disposed.

The first PGM layer may be disposed, for example, by coating the first PGM layer-forming coating solution onto the partition walls of the substrate on which the NH₃ adsorption layer has been disposed, across a specified length from the upstream end of the exhaust gas flow, and drying and firing it.

The first PGM layer-forming coating solution may be a liquid in which a specified inorganic oxide and a precursor for a noble metal catalyst selected from among Pd and Pt, as well as specified amounts of other optional components, are dissolved or dispersed in an appropriate solvent (typically water).

The noble metal catalyst precursor may be a nitrate, sulfate, hydrochloride or acetate of a specified noble metal catalyst.

For the first PGM layer-forming coating solution as well, a thickener similar to the thickener of the NH₃ adsorption layer-forming coating solution may be added to adjust the viscosity of the coating solution, thus facilitating control of the coating length of the coating solution.

Drying and firing after coating of the coating solution may be carried out according to a publicly known method, or after appropriate modifications by a person skilled in the art.

The second PGM layer is then disposed.

The second PGM layer may be disposed, for example, by coating the second PGM layer-forming coating solution onto the partition walls of the substrate on which the NH₃ adsorption layer and first PGM layer have already been disposed, across a specified length from the downstream end of the exhaust gas flow, and drying and firing it.

The second PGM layer-forming coating solution may be the same as the first PGM layer-forming coating solution, except that a nitrate, sulfate, hydrochloride or acetate of Rh is used as the noble metal catalyst precursor.

Drying and firing after coating of the coating solution may be carried out according to a publicly known method, or after appropriate modifications by a person skilled in the art.

An exhaust gas purification catalyst device having a PGM layer with a first PGM layer and a second PGM layer can be produced by the method described above, or by the same method with appropriate modification by a person skilled in the art.

### <Exhaust gas purification catalyst system>

Yet another aspect of the invention provides an exhaust gas purification catalyst system.

The exhaust gas purification catalyst system of the invention is an exhaust gas purification catalyst system for a gasoline engine comprising:
an upstream end purification catalyst device disposed at the upstream end of the exhaust gas flow in the exhaust system of the gasoline engine, and
a downstream end purification catalyst device disposed at the downstream end of the exhaust gas flow in the exhaust system,
   wherein the upstream end purification catalyst device is a three-way exhaust gas purification catalyst device comprising a platinum group noble metal catalyst, and
the downstream end purification catalyst device is an exhaust gas purification catalyst device of the invention as described above.

The three-way exhaust gas purification catalyst device used as the upstream end purification catalyst device may be any publicly known one, and particularly preferred is a three-way exhaust gas purification catalyst device comprising one or more selected from among Pd and Pt, and Rh.

### <Exhaust gas purification method>

Yet another aspect of the invention provides an exhaust gas purification method.

The exhaust gas purification method of the invention is an exhaust gas purification method which comprises:
disposing an exhaust gas purification catalyst device of the invention or an exhaust gas purification catalyst system of the invention in an exhaust system for a gasoline engine, and purifying exhaust gas that has been emitted from the gasoline engine.

### EXAMPLES

### 1. Coating solution preparation

The alumina, OSC material and binder used for preparation of the coating solution were the following.
Alumina: Alumina containing 4.0% La₂O₃ and 96.0% Al₂O₃
OSC material of first PGM layer-forming coating solution: Complex oxide comprising 40.0 mass% CeO₂, 50.0 mass% ZrO₂ 5.0 mass% Pr₂O₃ and 5.0 mass% La₂O₃.
OSC material of second PGM layer-forming coating solution: Complex oxide comprising 21.0 mass% CeO₂, 72.0 mass% ZrO₂ 5.3 mass% Nd₂O₃ and 1.7 mass% La₂O₃.
Binder: Alumina binder

In Comparative Example 1-1 and Examples 1-1 to 1-7, the effect of the OSC material content in the first PGM layer was examined.

### <Comparative Example 1-1>

### (1) NH₃ adsorption layer-forming coating solution

In ion-exchanged water there were loaded 106.0 g/L of H-CHA, 7.0 g/L of an alumina binder and a cellulosic resin as a thickener, and the mixture was stirred to prepare a NH₃ adsorption layer-forming coating solution.

### (2) Preparation of first PGM layer-forming coating solution

In ion-exchanged water there were loaded platinum nitrate in an amount corresponding to 1.1 g/L in terms of Pt metal, 180.0 g/L of alumina, 10.0 g/L of BaSO₄, 4.0 g/L of an alumina binder, and a cellulosic resin as a thickener, and the mixture was stirred to prepare a first PGM layer-forming coating solution. No OSC material was added to the first PGM layer-forming coating solution of Comparative Example 1-1.

### (3) Preparation of second PGM layer-forming coating solution

In ion-exchanged water there were loaded rhodium nitrate in an amount corresponding to 0.22 g/L in terms of Rh metal, 43.0 g/L of an OSC material (8.6 g/L in terms of CeO₂), 75.0 g/L of alumina, 2.0 g/L of an alumina binder and a cellulosic resin as a thickener, and the mixture was stirred to prepare a second PGM layer-forming coating solution.

### 2. Production of exhaust gas purification catalyst devices

A cordierite straight flow type honeycomb substrate (diameter: 105.7 mm, full length: 114.3 mm, apparent capacity: 1.003 L, number of cells: 400 cpsi) was coated with the total amount of the NH₃ adsorption layer-forming coating solution across a range of 75% of the full length of the substrate from the upstream end of the exhaust gas flow, and after ventilation drying at 90°C for 2 hours, it was fired at 500°C for 2 hours to form an NH₃ adsorption layer on the substrate with a coating amount of 113.0 g/L.

Next, the total amount of the first PGM layer-forming coating solution was coated across the entire length of the substrate from the upstream end of the exhaust gas flow on the substrate after formation of the NH₃ adsorption layer, and after ventilation drying at 90°C for 2 hours, it was fired at 500°C for 2 hours to form a first PGM layer (Pt layer) on the upstream end of the exhaust gas flow, with a coating amount of 195.1 g/L.

In addition, the total amount of the second PGM layer-forming coating solution was coated across a region of 70% of the full length of the substrate from the downstream end of the exhaust gas flow after formation of the NH₃ adsorption layer and Pt layer, and ventilation dried at 90°C for 2 hours, after which it was fired at 500°C for 2 hours to form a second PGM layer (Rh layer) on the downstream end of the exhaust gas flow, with a coating amount of 120.22 g/L, to produce an exhaust gas purification catalyst device for Comparative Example 1-1.

### 3. Evaluation of exhaust gas purification catalyst device

The exhaust gas purification catalyst device of Comparative Example 1-1 was evaluated by the following method, as an exhaust gas purification catalyst system combined with a 3-way catalyst device (substrate apparent capacity: 1.003 L) comprising Pd and Rh as noble metal catalysts.

### (1) Durability testing

An exhaust gas purification catalyst system was constructed by disposing a 3-way catalyst device at the upstream end of the exhaust system of a V8 gasoline engine with 4,600 cc displacement, and the exhaust gas purification catalyst device of Comparative Example 1-1 at the downstream end. The engine was operated for 46 hours, with an average engine rotational speed of 3,000 rpm and an input gas temperature of 850°C into the downstream end exhaust gas purification catalyst device, alternately circulating exhaust gas through the exhaust gas purification catalyst system from a stoichiometric atmosphere and a lean atmosphere for a fixed period of time each, for durability testing of the exhaust gas purification catalyst system.

### (2) Measurement of NH₃ emission

An exhaust gas purification catalyst system was constructed with a 3-way catalyst device directly under the engine of an actual vehicle comprising a gasoline engine with 1,500 cc displacement, and with the durability-tested exhaust gas purification catalyst device of Comparative Example 1-1 as an underfloor catalyst. The exit side of the exhaust gas purification catalyst device of Comparative Example 1-1 was connected to an FT-IR apparatus. The actual vehicle in this state was operated in driving mode on a chassis dynamometer, to simulate an RDE (Real Driving Emission) test. The NH₃ concentration of the exhaust gas emitted from the exhaust gas purification catalyst device of Comparative Example 1-1 was measured by FT-IR, and the NH₃ emission was determined. A commercially available automobile exhaust gas measuring device was connected to the exit end of the exhaust gas purification catalyst device of Comparative Example 1-1, and the CO and THC (total hydrocarbon) emissions were measured. The results are shown in Table 1.

### <Examples 1-1 to 1-7>

Exhaust gas purification catalyst devices were produced and evaluated in the same manner as Comparative Example 1-1, except that for "(2) Preparation of first PGM layer-forming coating solution", the OSC material and alumina contents were changed as listed in Table 1. The results are shown in Table 1.

### [Table 1]

**Table 1**

| | Construction of first PGM laver | | | | | | | | Evaluation results | |
|---|---|---|---|---|---|---|---|---|---|---|
| | Pt (g/L) | OSC material | | Alumina (g/L) | Ba sulfate (g/L) | Binder (g/L) | Coating length (% of substrate) | Coating amount (g/L) | NH₃ (mg/km) | NOx (mg/km) |
| | | Total amount (g/L) | CeO₂ (g/L) | | | | | | | |
| Comparative Example 1-1 | 1.1 | 0 | 0 | 180.0 | 10.0 | 4.0 | 100 | 195.1 | 12.1 | 38 |
| Example 1-1 | 1.1 | 18.0 | 7.2 | 162.0 | 10.0 | 4.0 | 100 | 195.1 | 8.8 | 48 |
| Example 1-2 | 1.1 | 36.0 | 14.4 | 144.0 | 10.0 | 4.0 | 100 | 195.1 | 5.7 | 56 |
| Example 1-3 | 1.1 | 54.0 | 21.6 | 126.0 | 10.0 | 4.0 | 100 | 195.1 | 4.2 | 51 |
| Example 1-4 | 1.1 | 72.0 | 28.8 | 108.0 | 10.0 | 4.0 | 100 | 195.1 | 3.1 | 56 |
| Example 1-5 | 1.1 | 92.0 | 36.8 | 88.0 | 10.0 | 4.0 | 100 | 195.1 | 2.4 | 57 |
| Example 1-6 | 1.1 | 112.0 | 44.8 | 68.0 | 10.0 | 4.0 | 100 | 195.1 | 2.00 | 59 |
| Example 1-7 | 1.1 | 132.0 | 52.8 | 48.0 | 10.0 | 4.0 | 100 | 195.1 | 2.00 | 65 |

The following may be concluded from the results in Table 1.

With the exhaust gas purification catalyst device of Comparative Example 1-1 which had no OSC material in the first PGM layer, the NH₃ emission level was extremely high. In contrast, NH₃ emission was suppressed with the exhaust gas purification catalyst devices of Examples 1-1 to 1-7 which comprised OSC materials in the first PGM layer. In particular, with the exhaust gas purification catalyst devices of Examples 1-1 to 1-6 wherein the amount of OSC material (CeO₂) in the first PGM layer was in the range of 5.0 g/L or greater and 50.0 g/L or less, it was possible to suppress NH₃ emission without significantly impairing the inhibiting effect on NOx emission.

In Examples 2-1 to 2-5, the effect of the OSC material content in the second PGM layer was examined.

### <Example 2-1>

### (1) NH₃ adsorption layer-forming coating solution

The NH₃ adsorption layer-forming coating solution of Example 2-1 was prepared in the same manner as the NH₃ adsorption layer-forming coating solution of Comparative Example 1-1.

### (2) Preparation of first PGM layer-forming coating solution

In ion-exchanged water there were loaded platinum nitrate in an amount corresponding to 1.1 g/L in terms of Pt metal, 45.0 g/L of an OSC material (18.0 g/L in terms of CeO₂), 135.0 g/L of alumina, 10.0 g/L of BaSO₄, 4.0 g/L of an alumina binder, and a cellulosic resin as a thickener, and the mixture was stirred to prepare a first PGM layer-forming coating solution.

### (3) Preparation of second PGM layer-forming coating solution

In ion-exchanged water there were loaded rhodium nitrate in an amount corresponding to 0.22 g/L in terms of Rh metal, 118.0 g/L of alumina, 2.0 g/L of an alumina binder, and a cellulosic resin as a thickener, and the mixture was stirred to prepare a second PGM layer-forming coating solution. No OSC material was added to the second PGM layer-forming coating solution of Example 2-1.

### 2. Production of exhaust gas purification catalyst devices

Exhaust gas purification catalyst devices were produced in the same manner as Comparative Example 1-1, except that the coating solutions prepared as described above were used as the "NH₃ adsorption layer-forming coating solution", "first PGM layer-forming coating solution" and "second PGM layer-forming coating solution", respectively.

### 3. Evaluation of exhaust gas purification catalyst devices

The exhaust gas purification catalyst device of Example 2-1 obtained as described above was used for evaluation in the same manner as Comparative Example 1-1. The results are shown in Table 2.

### <Examples 2-2 to 2-5>

Exhaust gas purification catalyst devices were produced and evaluated in the same manner as Example 2-1, except that for "(3) Preparation of second PGM layer-forming coating solution", the OSC material and alumina contents were changed as listed in Table 2. The results are shown in Table 2.

### [Table 2]

**Table 2**

| | Construction of second PGM laver | | | | | | | Evaluation results | |
|---|---|---|---|---|---|---|---|---|---|
| | Rh (g/L) | OSC material | | Alumina (g/L) | Binder (g/L) | Coating length (% of substrate) | Coating amount (g/L) | NH₃ (mg/km) | NOx (mg/km) |
| | | Total amount (g/L) | CeO₂ (g/L) | | | | | | |
| Example 2-1 | 0.22 | 0 | 0 | 118.0 | 2.0 | 70 | 120.2 | 5.2 | 50 |
| Example 2-2 | 0.22 | 20.5 | 4.1 | 97.5 | 2.0 | 70 | 120.2 | 5.6 | 42 |
| Example 2-3 | 0.22 | 41.0 | 8.2 | 77.0 | 2.0 | 70 | 120.2 | 5.5 | 49 |
| Example 2-4 | 0.22 | 61.5 | 12.3 | 56.5 | 2.0 | 70 | 120.2 | 5.4 | 46 |
| Example 2-5 | 0.22 | 82.0 | 16.4 | 36.0 | 2.0 | 70 | 120.2 | 4.2 | 51 |

The results in Table 2 confirmed that the presence and amount of OSC material in the second PGM layer had essentially no effect on NH₃ emission or NOx emission of the exhaust gas purification catalyst device.

### REFERENCE SIGNS LIST

10 Substrate
20 NH₃ adsorption layer
30 PGM layer
31 First PGM layer
32 Second PGM layer
100 Exhaust gas purification catalyst device

## Claims

1. An exhaust gas purification catalyst device for a gasoline engine, comprising:
a substrate,
an NH₃ adsorption layer containing proton-type zeolite, and
a PGM layer containing a noble metal catalyst selected from among Pd, Pt and Rh, wherein
the proton-type zeolite in the NH₃ adsorption layer has a mean pore size of 0.60 nm or smaller,
the NH₃ adsorption layer
is disposed further toward the substrate side than the PGM layer, and
is disposed at a location with a shorter length than the full length of the substrate, from the upstream end of the exhaust gas flow on the substrate, and
the PGM layer is disposed at a location with a longer length than the NH₃ adsorption layer, from the upstream end of the exhaust gas flow on the substrate,
the PGM layer comprising a first PGM layer containing a noble metal catalyst selected from among Pd and Pt, and a second PGM layer containing Rh, and
the first PGM layer comprising ceria.

2. The exhaust gas purification catalyst device according to claim 1, wherein the proton-type zeolite comprises a small-ring proton-type zeolite in which the basic skeleton is composed entirely of rings selected from among 4, 6 and 8-membered rings, at 80 mass% or greater with respect to the total mass of the proton-type zeolite.

3. The exhaust gas purification catalyst device according to claim 2, wherein the small-ring proton-type zeolite is one or more selected from among H-ACO, H-AEI, H-AEN, H-AFN, H-AFT, AFX, H-ANA, H-APC, H-APD, H-ATT, H-CDO, H-CHA, H-DDR, H-DFT, H-EAB, H-EDI, H-EPI, H-ERI, H-GIS, H-GOO, H-IHW, H-ITE, H-ITW, H-LEV, H-LTA, H-KFI, H-MER, H-MON, H-NSI, H-OWE, H-PAU, H-PHI, H-RHO, H-RTH, H-SAT, H-SAV, H-SIV, H-THO, H-TSC, H-UEI, H-UFI, H-VNI, H-YUG and H-ZON.

4. The exhaust gas purification catalyst device according to claim 1, wherein the amount of ceria in the first PGM layer is 4.0 g/L or greater and 45.0 g/L or lower as the ceria mass per 1 L of substrate capacity.

5. The exhaust gas purification catalyst device according to claim 2, wherein the amount of ceria in the first PGM layer is 4.0 g/L or greater and 45.0 g/L or lower as the ceria mass per 1 L of substrate capacity.

6. The exhaust gas purification catalyst device according to any one of claims 1 to 5, wherein
the first PGM layer is the uppermost layer in direct contact with the exhaust gas across a length of at least 10% of the full length of the substrate from the upstream end of the exhaust gas flow on the substrate, and
the second PGM layer is the uppermost layer in direct contact with the exhaust gas across a length of at least 20% of the full length of the substrate from the downstream end of the exhaust gas flow on the substrate.

7. The exhaust gas purification catalyst device according to claim 6, wherein the first PGM layer is disposed at a length of greater than 70% of the full length of the substrate from the upstream end of the exhaust gas flow on the substrate.

8. The exhaust gas purification catalyst device according to claim 6, wherein the second PGM layer is disposed at a length of 20% or greater and 90% or less of the full length of the substrate from the downstream end of the exhaust gas flow on the substrate.

9. The exhaust gas purification catalyst device according to claim 6, wherein
the first PGM layer is disposed at a length of greater than 70% of the full length of the substrate from the upstream end of the exhaust gas flow on the substrate,
the second PGM layer is disposed at a length of 30% or greater and 90% or less of the full length of the substrate from the downstream end of the exhaust gas flow on the substrate,
the total of the length of the first PGM layer and the length of the second PGM layer exceeds the full length of the substrate, and
the second PGM layer is the uppermost layer in direct contact with the exhaust gas in the region where the first PGM layer and the second PGM layer overlap.

10. An exhaust gas purification method which comprises disposing an exhaust gas purification catalyst device according to any one of claims 1 to 5 in an exhaust system of a gasoline engine, to purify exhaust gas that has been emitted from the gasoline engine.

11. An exhaust gas purification catalyst system for a gasoline engine, comprising:
an upstream end purification catalyst device disposed at the upstream end of the exhaust gas flow in the exhaust system of the gasoline engine, and
a downstream end purification catalyst device disposed at the downstream end of the exhaust gas flow in the exhaust system,
wherein the upstream end purification catalyst device is a three-way exhaust gas purification catalyst device comprising a platinum group noble metal catalyst, and
the downstream end purification catalyst device is an exhaust gas purification catalyst device according to any one of claims 1 to 5.

12. An exhaust gas purification method which comprises disposing an exhaust gas purification catalyst system according to claim 11 in an exhaust system of a gasoline engine, to purify exhaust gas that has been emitted from the gasoline engine.
